# EUROPÄISCHE PATENTSCHRIFT

(11) **EP 1 953 114 B1**
(45) Veröffentlichungstag und Bekanntmachung des Hinweises auf die Patenterteilung: **17.07.2013**
(21) Anmeldenummer: 08000749.5
(22) Anmeldetag: 16.01.2008
(51) Int. Cl.: B66F 9/22, G01G 19/08

(54) **Flurförderzeug mit einem hydraulisch anhebbaren Lastaufnahmemittel**
Industrial truck with a hydraulically liftable load pick-up
Chariot élévateur doté d'un dispositif de saisie de charge pouvant s'élever hydrauliquement

(30) Priorität: 01.02.2007 DE 102007005097
(43) Veröffentlichungstag der Anmeldung: 06.08.2008
(73) Patentinhaber: STILL GmbH, 22113 Hamburg (DE)
(72) Erfinder: Hehn, Martin Jürgen, 72793 Pfullingen (DE)
(74) Vertreter: Geirhos, Johann

(56) Entgegenhaltungen:
- EP-A- 0 246 363
- DE-A1- 4 328 148
- DE-A1- 10 259 470
- DE-A1-102007 059 436
- US-A- 5 666 295
- US-B1- 6 232 566
- BONCHIS A ET AL: "A pressure-based, velocity independent, friction model for asymmetric hydraulic cylinders" ROBOTICS AND AUTOMATION, 1999. PROCEEDINGS. 1999 IEEE INTERNATIONAL CO NFERENCE ON DETROIT, MI, USA 10-15 MAY 1999, PISCATAWAY, NJ, USA,IEEE, US, Bd. 3, 10. Mai 1999 (1999-05-10), Seiten 1746-1751, XP010336533 ISBN: 978-0-7803-5180-6

## Beschreibung

Die Erfindung betrifft ein Verfahren zum Betrieb eines Flurförderzeugs mit mindestens einem hydraulisch anhebbaren Lastaufnahmemittel und mindestens einer Vorrichtung zur Ermittlung des Drucks in einem mit dem Lastaufnahmemittel in Wirkverbindung stehenden Hydraulikkreis

Die Kenntnis des Lastgewichts ist für die Sicherheit von Flurförderzeugen, insbesondere im Hinblick auf die Standsicherheit, von großer Bedeutung. Dementsprechend ist eine Vielzahl von Vorrichtungen und Verfahren bekannt, um dieses Gewicht möglichst genau und mit wenig Aufwand zu bestimmen. Neben speziellen, aufwändigen Vorrichtungen, die Dehnungsmessungen im Bereich des Hubgerüsts vornehmen und über die Berechnung der auftretenden Kräfte das Lastgewicht ermitteln, wird häufig versucht, im Flurförderzeug bereits vorhandene Vorrichtungen zur Lastmessung zu verwenden.

Eine Möglichkeit besteht dabei darin, aus dem zumeist ohnehin erfassten Druck in dem Teil des Hydraulikkreises, der der Anhebung der Last dient, das Lastgewicht zu berechnen. Ein statischer Zustand innerhalb des Hubhydraulikkreises, bei dem ein einfacher Zusammenhang zwischen Druck und Last besteht, kann in der Praxis nicht erreicht werden, weshalb die Berücksichtigung von vielen Faktoren nötig ist, um hinreichend genaue Messungen zu erreichen.

Mögliche Einflussgrößen für die Bestimmung des Lastgewichts sind beispielsweise die Beschaffenheit der Hydraulikflüssigkeit, deren Temperatur und Volumenstrom, insbesondere bestimmt aus der Drehzahl der Hydraulikpumpe sowie der Ventilöffnung eines dem oder den Hubzylindern vorgelagerten Ventils, der Hubbereich (Haupthub und/oder Freihub), Hubrichtung (Heben oder Senken) sowie die Reibung im System.

Um diese Einflussgrößen zu berücksichtigen, ist es aus der DE 102 59 470 bekannt, für das am Flurförderzeug angebrachte Hubgerüst mittels mehrfacher Referenzmessungen an zwei verschiedenen bekannten Lastgewichten eine Referenzkurve zu bestimmen, die die Abhängigkeit von Druck und Lastgewicht wiedergibt und dann im Betrieb durch kurze Hebe- und Senkbewegungen einen Mittelwert für den Druck zu ermitteln, der anhand der Referenzkurve dann die Berechnung des Lastgewichts ermöglicht. Dieses Verfahren ist jedoch aufwändig, da eine aufgenommene Last zunächst in beide Richtungen bewegt werden muss, um ihr Gewicht zu bestimmen.

Weiterhin ist das Verfahren für jedes Fahrzeug jeweils eigenständig durchzuführen, so dass sich bei der Herstellung einer Vielzahl von Fahrzeugen ein erheblicher Aufwand für den Hersteller und/oder Benutzer ergibt, da vor der Nutzung des Systems dieses zunächst aufwändig mittels zweier unterschiedlicher Referenzgewichte kalibriert werden muss.

Aus der US 5,666,295 ist eine hydraulische Hubvorrichtung für einen Gabelstapler bekannt, bei der dynamisch das Lastgewicht während des Anhebens durch den entsprechenden Druck in dem Hydrauliksystem gemessen wird. Um Fehler durch Vibrationen zu vermeiden, wird aus einer Mehrzahl von Messwerten der Maximalwert während einer Hubbewegung genommen, wenn keine Beschleunigung oder Verzögerung der Hubbewegung vorliegt. Weiter offenbart die D1, dass ein Taragewicht der leeren Hubgabel bestimmt wird. Hierzu wird bei einer Hubbewegung ohne Last ein Schalter gedrückt.

Der Erfindung liegt daher die Aufgabe zugrunde, ein Verfahren zum Betrieb eines Flurförderzeugs mit mindestens einem hydraulisch anhebbaren Lastaufnahmemittel und mindestens einer Vorrichtung zur Ermittlung des Drucks in einem mit dem Lastaufnahmemittel in Wirkverbindung stehenden Hydraulikkreis bereitzustellen, das eine einfache und genaue Bestimmung des Lastgewichts aus mindestens einer Druckmessung im mit dem Lastaufnahmemittel in Wirkverbindung stehenden Hydraulikkreis ermöglicht.

Diese Aufgabe wird erfindungsgemäß dadurch gelöst, dass im laufenden Betrieb des Flurförderzeugs bei Anheben und/oder Absenken des Lastaufnahmemittels mit maximaler Sollgeschwindigkeit der Druck im Hydraulikkreis erfasst und in einer der jeweiligen Bewegungsrichtung (Heben/Senken) zugeordneten ersten Speichervorrichtung gespeichert wird, bei Vorliegen einer vorbestimmten Anzahl von Messwerten in der jeweiligen einer Bewegungsrichtung zugeordneten ersten Speichervorrichtung, vorzugsweise zwischen 5 und 10 Messwerten, der niedrigste der Messwerte ausgewählt und in einer der jeweiligen Bewegungsrichtung zugeordneten zweiten Speichervorrichtung abgelegt und bei Vorliegen einer weiteren vorbestimmten Anzahl von Messwerten in der zweiten Speichervorrichtung, vorzugsweise zwischen annähernd 10 und 30, insbesondere ungefähr 20 Messwerten, aus diesen Messwerten ein der jeweiligen Bewegungsrichtung zugeordneter Mittelwert mH (für den Hebevorgang) beziehungswelse mS (für den Absenkvorgang) ermittelt wird. Das Lastgewicht wird beim Heben oder Senken mittels einer Kennkurve oder eines Kennfeldes aus dem Druck in einem mit dem Lastaufnahmemittel in Wirkverbindung stehenden Hydraulikkreis und eines der jeweiligen Bewegungsrichtung zugeordneten Mittelwertes m als Kenngröße für die Reibung innerhalb des Hydrauliksystems ermittelt, wobei die Kennkurve oder das Kennfeld durch die Auswertung statistisch geplanter Versuchsreihen zum Einfluss einzelner Parameter, auf den Zusammenhang zwischen Hydraulikdruck und Lastgewicht für das am Flurförderzeug verwendete Hubgerüst ermittelt wurde, wobei die einzelnen Parameter mindestens einen aus Druck im Hydraulikkreis, Temperatur der Hydraulikflüssigkeit, Drehzahl der Hydraulikpumpe, Hubrichtung, Hubbereich, Ventilstellung, und Reibung im Hydrauliksystem umfassen,

Bei normalem Betrieb des Flurförderzeugs ist davon auszugehen, dass innerhalb einer gewissen Anzahl von Lastspielen der Hubvorrichtung mit maximaler Hebebeziehungsweise Senkgeschwindigkeit zumindest eines der Lastspiele lastfrei erfolgt. Indem der Druck bei Lastspielen mit maximaler Geschwindigkeit erfasst, gespeichert und verglichen wird, kann das vermutlich lastfreie Lastspiel identifiziert werden.

Indem der Druckwert dieses Lastspiels in einer zweiten Speichervorrichtung, vorzugsweise einem Ringspeicher abgelegt wird, kann durch Bildung des Mittelwerts mH (für den Hebevorgang) beziehungsweise mS (für den Absenkvorgang) aus den dort gespeicherten Druckwerten der Einfluss von Messungenauigkeiten reduziert und ein möglichst genauer Wert für den Druck im System bei lastfreien Hubbewegungen ermittelt werden. Die genannten Angaben für die Anzahl der Messungen haben sich in Versuchen als besonders geeignet erwiesen, um einerseits sicherzustellen, dass eine hinreichende Genauigkeit erzielt wird und andererseits hinreichend schnell den Einfluss von Änderungen im System zu erfassen und den Aufwand für Speichereinrichtungen zu begrenzen

Eine Kennkurve beziehungsweise ein Kennfeld sind besonders geeignet, auch komplexe Zusammenhänge zwischen den erfassten Parametern und dem Lastgewicht abzubilden.

Indem die Kennkurve und/oder das Kennfeld durch die Auswertung statistisch geplanter Versuchsreihen zum Elnfluss einzelner Parameter auf den Zusammenhang zwischen Hydraulikdruck und Lastgewicht für das am Flurförderzeug verwendete Hubgerüst ermittelt wurde, ist es möglich, das Lastgewicht sehr genau zu bestimmen. Der Einfluss der einzelnen Parameter kann unter kontrollierten Bedingungen sehr genau bestimmt werden. Durch die Ermittlung der Kennkurven beziehungsweise der Kennfelder für verschiedene Hubgerüste unabhängig vom Flurförderzeug, entfallen aufwändige Versuchsrelhen mit dem Fahrzeug, so dass dieses direkt einsatzbereit ist.

. Es ist bekannt, dass der Zusammenhang von Hydraulikdruck und Lastgewicht wesentlich von den Kenngrößen Druck im Hydraulikkreis, Temperatur der Hydraulikflüssigkeit, Drehzahl der Hydraulikpumpe, Hubrichtung, Hubbereich, Ventilistellung, Reibung im Hydrauliksystem beeinflusst wird. Zudem sind in den meisten Flurtörderzeugen Mittel zum Erfassen dieser Kenngrößen ohnehin vorhanden, so dass keine aufwändigen zusätzlichen Messvorrichtungen benötigt werden.

Es ist von besonderem Vorteil, wenn der bei Anheben und/oder Absenken des Lastaufnahmemittels mit maximaler Sollgeschwindigkeit im Hydraulikkreis erfasste Druck nur bei Unterschreiten eines festgelegten Schwellenwertes in einer der jeweiligen Bewegungsrichtung (Heben/Senken) zugeordneten ersten Speichervorrichtung gespeichert wird. Dadurch wird sichergestellt, dass nur plausible Werte erfasst werden, d.h. dass Werte von Lastspielen mit großen Lasten nicht in der Speichervorrichtung abgelegt werden und somit nicht das Messergebnis verfälschen.

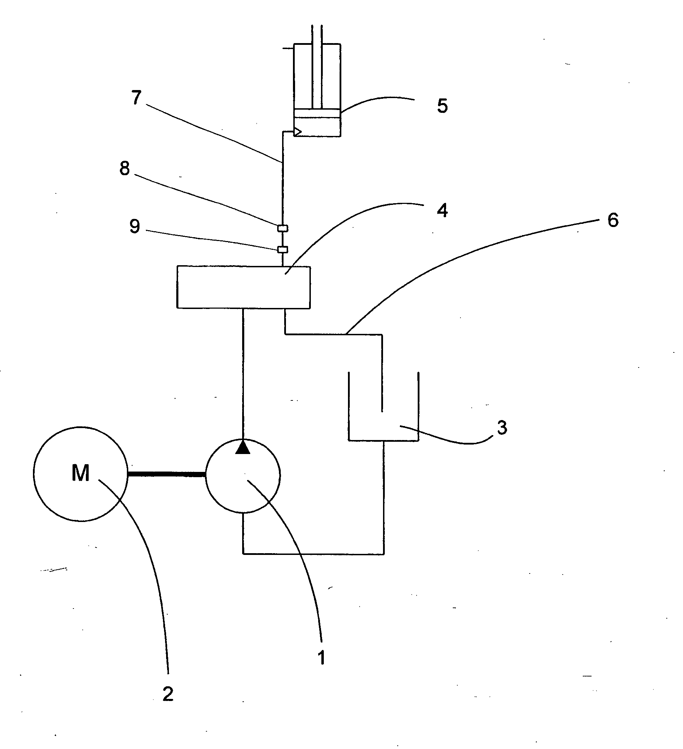

Weitere Vorteile und Einzelheiten der Erfindung werden im Folgenden anhand des in der Zeichnung dargestellten Ausführungsbeispiels näher erläutert. Die Figur zeigt schematisch den Hydraulikkreislauf eines Flurförderzeugs, beispielsweise eine Gegengewichtsgabelstaplers, eines Schubmaststaplers, eines Hochhubwagens oder eines Hochhubkommissionierers.

Eine Hydraulikpumpe 1, die von einem Motor 2 angetrieben wird, liefert Hydraulikflüssigkeit von einem Tank 3 zu einer Ventileinheit 4. An die Ventileinheit 4 ist ein Hubzylinder 5 angeschlossen, sowie eine Rücklaufleitung 6, die Hydraulikflüssigkeit in den Tank 3 zurückführt. Der Motor 2 kann je nach Art des Flurförderzeugs, wie in diesem Ausführungsbeispiel, als Elektromotor 2 oder als Verbrennungsmotor ausgeführt sein. Ebenso können an der Ventileinheit 4 noch weitere hydraulische Verbraucher, wie beispielsweise Neigezylinder oder Schubzylinder angeschlossen sein. An der Zuleitung 7 zum Hubzylinder 5 sind eine Druckmessvorrichtung 8 sowie eine Temperaturmessvorrichtung 9 angeschlossen.

Während des Hebevorgangs wird der Hubzylinder 5 über ein in der Ventileinheit 4 angeordnetes Ventil mit der Hydraulikpumpe 1 verbunden, wobei die.

Hubgeschwindigkeit nach den Vorgaben der Bedienperson über ein geeignetes Bedienelement, beispielsweise einen Handhebel, durch die Drehzahl der Hydraulikpumpe 1 und die Öffnung des Ventils vorgegeben wird. Üblicherweise ist in Flurförderzeugen bei maximaler Leistungsanforderung durch die Bedienperson das Ventil vollständig geöffnet und die Drehzahl der Pumpe 1 maximal.

Zum Absenken wird der Hubzylinder 5 mittels der Ventileinheit 4 mit dem Tank 3 verbunden. Die maximale Geschwindigkeit wird hierbei von der Ventilöffnung bestimmt. Es sind jedoch auch Lösungen möglich, bei denen der Senkvorgang durch Pumpenunterstützung oder durch Verwendung eines doppeltwirkenden Zylinders, der in Senkrichtung ebenfalls mit Hydraulikdruck beaufschlagt werden kann, beschleunigt wird.

Die Messwerte der Druckmessvorrichtung 8 sowie der Temperaturmessvorrichtung 9 werden an eine hier nicht dargestellte Steuereinheit übermittelt. In der Steuereinheit werden ebenfalls die weiteren für die Ermittlung des Lastgewichts relevanten Daten, wie Pumpendrehzahl, Hubrichtung (Heben/Senken) und Hubbereich (Haupthub, Freihub) sowie Ventilstellung in der Ventileinheit 4, gesammelt. Diese Daten werden mit hier ebenfalls nicht dargestellten Vorrichtungen nach dem Stand der Technik direkt oder indirekt erfasst, beispielsweise mittels geeigneter Sensoren, durch die Detektion von Bedienelementestellungen oder von elektrischen Werten des Pumpenmotors.

Die Auswahl der erforderlichen Einflussgrößen wie auch die quantitative Bestimmung des Einflusses dieser Größen auf die Berechnung des Lastgewichts aus dem Druck im Hydraulikkreis wird auf der Grundlage von statistisch geplanten Versuchsreihen für die am Flurförderzeug einsetzbaren Hubgerüstvarianten vorgenommen. Als Ergebnis dieser Versuchsreihen wird eine Kennkurve oder ein Kennfeld ermittelt, die für das jeweilige Hubgerüst spezifisch ist. Diese Versuchsreihen können beim Hersteller des Hubgerüsts und/oder des Flurförderzeugs auch an Hubgerüsten vorgenommen werden, die nicht an einem Flurförderzeug montiert sind.

Hubgerüste werden für ansonsten identische Flurförderzeuge nämlich häufig in unterschiedlichen Varianten angeboten, wie auch unterschiedliche Fahrzeugtypen mit identischen Hubgerüsten ausgestattet werden können. Dabei können sich diese sowohl vom mechanischen Aufbau (z.B. Freihub-, Einfach-, Duplex-, Triplex-Hubgerüste, maximale Hubhöhe, verwendete Mastprofile) wie auch von der hydraulischen Ausrüstung (z.B. Hubkolben, Zuleitungen, Ventile, Pumpe und Motor) teilweise erheblich unterschieden.

Das einmal ermittelte Kennfeld kann daher bei Verwendung eines Hubgerüsts gleichen Typs an unterschiedlichen Flurförderzeugen für jedes dieser Fahrzeuge verwendet werden, ebenso wie bei Verwendung unterschiedlicher Hubgerüste an einem Fahrzeugtyp eine Anpassung durch einfaches Hinterlegen eines neuen Kennfeldes in der Steuerungseinheit vorgenommen werden kann. Dadurch werden aufwändige Versuche und Kalibrierfahrten an fertigen Fahrzeugen vermieden, die deren Einsatzzeit einschränken und die Herstellung einer Flotte von Flurförderzeugen, die eine genaue Messung des Lastgewichts erlauben, wesentlich vereinfacht.

Der Einfluss der Reibung im Hydraulikkreis wird dabei durch eine je nach Hubrichtung möglicherweise unterschiedliche Maßzahlen m_{H} (für den Hebevorgang) beziehungsweise m_{S} (für den Absenkvorgang) berücksichtigt. Diese Maßzahlen werden erfindungsgemäß dadurch bestimmt, dass die bei Anheben beziehungsweise Absenken des Lastaufnahmemittels mit maximaler Sollgeschwindigkeit (d.h. maximalem Volumenstrom bei voller Ventilöffnung und/oder praktisch maximaler Drehzahl der Hydraulikpumpe X) der Druck im Hydraulikkreis erfasst und bei Unterschreiten eines vorgegebenen Schwellenwertes in jeweils einem der Bewegungsrichtung (Heben/Senken) zugeordneten Speicher der Mittelwert der Messungen während des relevanten Hebe- beziehungsweise Senkvorgangs, d.h. während für das Lastaufnahmemittel maximale Sollgeschwindigkeit vorgegeben ist, abgelegt wird.

Die Vorgabe eines oberen Schwellenwertes, bei dessen Überschreitung keine Speicherung vorgenommen wird, dient der Überprüfung, ob der ermittelte Druckwert für eine lastfreie Bewegung des Lastaufnahmemittels plausibel ist. Der Schwellenwert ist so gewählt, dass der entsprechende Druck mit lastfreiem Lastaufnahmemittel praktisch nicht erreicht werden kann.

Liegt in diesem ersten Speicher eine vorbestimmten Anzahl von Messwerten vor, im Ausführungsbeispiel sind dies 8 Messwerte, wird der niedrigste der Messwerte ausgewählt und in einem der jeweiligen Bewegungsrichtung zugeordneten Ringspeicher abgelegt und bei Vorliegen einer weiteren vorbestimmten Anzahl von Messwerten in dem Ringspeicher, im gezeigten Ausführungsbeispiel sind dies 20 Messwerte, wird aus diesen Messwerten ein der jeweiligen Bewegungsrichtung zugeordneter Mittelwert m_{H} (für den Hebevorgang) beziehungsweise m_{S} (für den Absenkvorgang) ermittelt, der als Maßzahl für die Reibung in der jeweiligen Bewegungsrichtung dient.

Diese Maßzahl für die Reibung geht zusammen mit den anderen in der Steuereinheit gesammelten Daten in die Berechnung des Lastgewichts ein, die anhand des in der Steuereinheit abgelegten Kennfeldes vorgenommen wird. Das geschilderte Verfahren besitzt den Vorteil, dass keine Messungen an definierten Lasten vorzunehmen sind, sondern die Berücksichtigung der Reibung als eines wesentlichen sich verändernden Parameters, der nicht direkt über einen Sensor erfasst werden kann, im laufenden Betrieb erfolgt.

Selbstverständlich sind auch andere Ausgestaltungsformen der Erfindung denkbar. So kann anstelle der Mittelwertbildung des Drucks während des Hebe- bzw. Senkvorgangs, d.h. während sich das Lastaufnahmemittel mit maximaler Sollgeschwindigkeit bewegt, auch die Auswahl eines einzelnen Wertes, beispielsweise eines Extremwertes, insbesondere des minimalen Wertes, erfolgen.

Anstelle der Durchführung des erfindungsgemäßen Verfahrens in der Steuereinheit des Flurförderzeugs ist zu diesem Zweck auch ein eigenständiges Gerät denkbar, das die relevanten Betriebsparameter erfasst, indem es beispielsweise über ein Bussystem mit den Datengebern, wie Sensoren oder Steuerungen, in Verbindung steht und diese auswertet.

Selbstverständlich kann das Verfahren bei allen gängigen Flurförderzeugen und Hubgerüsten angewendet werden, beispielsweise auch bei Verwendung von mehr als einem Hubzylinder in Parallel- oder Serienschaltung.

## Patentansprüche

1. Verfahren zum Betrieb eines Flurförderzeugs mit mindestens einem hydraulisch anhebbaren Lastaufnahmemittel und mindestens einer Vorrichtung zur Ermittlung des Drucks (8) in einem mit dem Lastaufnahmemittel in Wirkverbindung stehenden Hydraulikkreis (1,7,6,3),
**dadurch gekennzeichnet,**
**dass** das Lastgewicht mittels einer Kennkurve oder eines Kennfeldes aus dem Druck beim Heben oder Senken in einem mit dem Lastaufnahmemittel in Wirkverbindung stehenden Hydraulikkreis und eines der jeweiligen Bewegungsrichtung zugeordneten Mittelwertes m als Kenngröße für die Reibung innerhalb des Hydrauliksystems ermittelt wird,
wobei die Kennkurve oder das Kennfeld durch die Auswertung statistisch geplanter Versuchsreihen zum Einfluss einzelner Parameter, auf den Zusammenhang zwischen Hydraulikdruck und Lastgewicht für das am Flurförderzeug verwendete Hubgerüst ermittelt wurde,
wobei die einzelnen Parameter mindestens einen aus Druck im Hydraulikkreis, Temperatur der Hydraulikflüssigkeit, Drehzahl der Hydraulikpumpe, Hubrichtung, Hubbereich, Ventilstellung, und Reibung im Hydrauliksystem umfassen,
und wobei
Im laufenden Betrieb des Flurförderzeugs bei Anheben und/oder Absenken des Lastaufnahmemittels mit maximaler Sollgeschwindigkeit der Druck im Hydraulikkreis erfasst und in einer der jeweiligen Bewegungsrichtung (Heben/Senken) zugeordneten ersten Speichervorrichtung gespeichert wird, bei Vorliegen einer vorbestimmten Anzahl von Messwerten in der jeweiligen einer Bewegungsrichtung zugeordneten ersten Speichervorrichtung, vorzugsweise zwischen 5 und 10 Messwerten, der niedrigste der Messwerte ausgewählt und in einer der jeweiligen Bewegungsrichtung zugeordneten zweiten Speichervorrichtung abgelegt und bei Vorliegen einer weiteren vorbestimmten Anzahl von Messwerten in der zweiten Speichervorrichtung, vorzugsweise zwischen annähernd 10 und 30, insbesondere ungefähr 20 Messwerten, aus diesen Messwerten ein der jeweiligen Bewegungsrichtung zugeordneter Mittelwert mH für den Hebevorgang beziehungsweise mS für den Absenkvorgang ermittelt wird.

2. Verfahren nach Anspruch 1, **dadurch gekennzeichnet, dass** der bei Anheben und/oder Absenken des Lastaufnahmemittels mit maximaler Sollgeschwindigkeit im Hydraulikkrels erfasste Druck nur bei Unterschreiten eines festgelegten Schwellenwertes in einer der jeweiligen Bewegungsrichtung (Heben/Senken) zugeordneten ersten Speichervorrichtung gespeichert wird.

3. Flurförderzeug mit mindestens einem hydraulisch anhebbaren Lastaufnahmemittel und mindestens einer Vorrichtung zur Ermittlung des Drucks in einem mit dem Lastaufnahmemittel in Wirkverbindung stehenden Hydraulikkreis, **dadurch gekennzeichnet, dass** eine Vorrichtung zur Durchführung eines Verfahrens nach einem der vorhergehenden Ansprüche vorgesehen ist.

## Claims

1. Method for operating an industrial truck with at least one hydraulically liftable load pick-up and at least one apparatus for determining the pressure (8) in a hydraulic circuit (1, 7, 6, 3) operatively connected to the load pick-up, **characterized in that** the load weight is determined by means of a characteristic curve or a family of characteristics from the pressure during lifting or lowering in a hydraulic circuit operatively connected to the load pick-up and a mean value m associated with the respective movement direction as characteristic variable for the friction within the hydraulic system, wherein the characteristic curve or the family of characteristics was determined by evaluation of statistically planned test series for the influence of individual parameters on the relationship between the hydraulic pressure and the load weight for the mast used on the industrial truck, wherein the individual parameters comprise at least one of pressure in the hydraulic circuit, temperature of the hydraulic fluid, speed of the hydraulic pump, lifting direction, lifting range, valve position, and friction in the hydraulic system, and wherein, during running operation of the industrial truck, the pressure in the hydraulic circuit is detected during lifting and/or lowering of the load pick-up at maximum setpoint speed and is stored in a first memory apparatus associated with the respective movement direction (lifting/lowering), when a predetermined number of measured values is present in the respective first memory apparatus associated with a movement direction, preferably between 5 and 10 measured values, the lowest of the measured values is selected and stored in a second memory apparatus associated with the respective movement direction, and when a further predetermined number of measured values is present in the second memory apparatus, preferably between approximately 10 and 30, in particular approximately 20 measured values, a mean value mH for the lifting operation or mS for the lowering operation, which mean value is associated with the respective movement direction, is determined from these measured values.

2. Method according to Claim 1, **characterized in that** the pressure detected in the hydraulic circuit during lifting and/or lowering of the load pick-up at maximum setpoint speed is stored in a first memory apparatus associated with the respective movement direction (lifting/lowering) only when a fixed threshold value is undershot.

3. Industrial truck having at least one hydraulically liftable load pick-up and at least one apparatus for determining the pressure in a hydraulic circuit operatively connected to the load pick-up, **characterized in that** an apparatus for implementing a method according to one of the preceding claims is provided.

## Revendications

1. Procédé d'utilisation d'un chariot élévateur doté d'au moins un moyen de réception de charge soulevable de façon hydraulique et d'au moins un dispositif de calcul de la pression (8) dans un circuit hydraulique (1, 7, 6, 3) en liaison active avec le moyen de réception de charge;
**caractérisé en ce que** :
le poids de charge est calculé à l'aide d'une courbe caractéristique ou d'une caractéristique découlant de la pression régnant lors du soulèvement ou de l'abaissement dans un circuit hydraulique en liaison active avec le moyen de réception de charge et d'une valeur moyenne m associée à la direction de déplacement respective prenant la forme d'une grandeur caractéristique pour le frottement observé à l'intérieur du système hydraulique ;
la courbe caractéristique ou la caractéristique étant calculée par l'analyse de séries d'essais planifiées statistiquement en vue d'influencer les paramètres individuels, pour la relation entre la pression hydraulique et le poids de charge pour le cadre de levage utilisé au niveau du chariot élévateur ;
les paramètres individuels comprenant au moins un élément parmi la pression régnant dans le circuit hydraulique, la température du fluide hydraulique, la vitesse de rotation de la pompe hydraulique, la direction de levée, la plage de levée, la position de soupape et le frottement régnant dans le système hydraulique ; et
la pression régnant dans le circuit hydraulique étant détectée lorsque le chariot élévateur fonctionne, lors du soulèvement ou de l'abaissement du moyen de réception de charge, à une vitesse théorique maximale et étant mémorisée dans un premier dispositif de mémoire associé à la direction de déplacement (soulèvement/abaissement) respective, en présence d'un nombre prédéterminé de valeurs de mesure dans le premier dispositif de mémoire respectif associé à une direction de déplacement, de préférence entre 5 et 10 valeurs de mesure, la plus basse des valeurs de mesure étant sélectionnée et mémorisée dans un deuxième dispositif de mémoire associé à la direction de déplacement respective et, en présence d'un nombre prédéterminé supplémentaire de valeurs de mesure mémorisées dans le deuxième dispositif de mémoire, de préférence entre approximativement 10 et 30, notamment d'approximativement 20 valeurs de mesure, une valeur moyenne, associée à la direction de déplacement respective, mH pour le processus de soulèvement et/ou mS pour le processus d'abaissement, étant calculée à partir de ces valeurs de mesure.

2. Procédé selon la revendication 1, **caractérisé en ce que** la pression détectée dans le circuit hydraulique en situation de soulèvement et/ou d'abaissement du moyen de réception de charge à la vitesse théorique maximale n'est mémorisée dans un premier dispositif de mémoire associé à la direction de déplacement respective (soulèvement/abaissement) qu'en cas de passage en dessous d'une valeur seuil déterminée.

3. Chariot élévateur doté d'au moins un moyen de réception de charge soulevable de façon hydraulique et d'au moins un dispositif de calcul de la pression régnant dans un circuit hydraulique en liaison active avec le moyen de réception de charge, **caractérisé en ce qu'**un dispositif est prévu pour la mise en oeuvre d'un procédé selon l'une quelconque des revendications précédentes.
